(19) Europäisches Patentamt
European Patent Office
Office européen des brevets

(11) **EP 2 431 706 B1**

(12) **EUROPEAN PATENT SPECIFICATION**

(45) Date of publication and mention
of the grant of the patent:
**16.08.2017 Bulletin 2017/33**

(51) Int Cl.:
***G01B 11/00*** *(2006.01)*     ***G06T 1/00*** *(2006.01)*
***B60M 1/28*** *(2006.01)*     ***B60L 5/26*** *(2006.01)*

(21) Application number: **10774953.3**

(86) International application number:
**PCT/JP2010/058083**

(22) Date of filing: **13.05.2010**

(87) International publication number:
**WO 2010/131696 (18.11.2010 Gazette 2010/46)**

(54) **DEVICE FOR MEASURING DISPLACEMENT OF PANTOGRAPH AND METHOD FOR DETECTING HARD SPOT OF TROLLEY WIRE**

VORRICHTUNG ZU MESSUNG VON STROMABNEHMERVERSCHIEBUNGEN UND VERFAHREN ZUR ERKENNUNG VON AUFHÄRTUNGEN BEI OBERLEITUNGSDRÄHTEN

DISPOSITIF POUR MESURER LE DEPLACEMENT DE PANTOGRAPHE ET PROCEDE DE DETECTION DE POINT DUR DE CABLE CONDUCTEUR

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.05.2009 JP 2009118285**

(43) Date of publication of application:
**21.03.2012 Bulletin 2012/12**

(73) Proprietor: **Meidensha Corporation**
**Tokyo 141-6029 (JP)**

(72) Inventors:
• **FUJISAWA Takamasa**
**Tokyo 141-6029 (JP)**

• **WATABE Yusuke**
**Tokyo 141-6029 (JP)**
• **KATO Kenji**
**Tokyo 141-6029 (JP)**

(74) Representative: **Strehl Schübel-Hopf & Partner**
**Maximilianstrasse 54**
**80538 München (DE)**

(56) References cited:
FR-A1- 2 882 973     FR-A1- 2 883 962
JP-A- 8 336 204     JP-A- 11 063 976
JP-A- 2002 279 409     JP-A- 2006 250 774
JP-A- 2008 104 312     JP-A- 2008 104 312
JP-A- 2009 244 023

**Description**

TECHNICAL FIELD

The present invention relates to a device for measuring displacement of a pantograph and a method for detecting a hard spot of a trolley wire, and particularly relates to a device for measuring displacement of a pantograph and a method for detecting a hard spot of a trolley wire in which a hard spot of a trolley wire is measured through pattern-matching processing using an image, captured by a line sensor camera, of a pantograph equipped with a marker designed for measuring a hard spot.

BACKGROUND ART

In electric railway facilities, measurement of hard spots of trolley wires can be cited as one of inspection items. A trolley wire is in a state of being suspended from a messenger wire via a hanger, for example. The weight of the trolley wire increases locally at a spot where the hanger is placed and at some spots such as where the trolley wire is connected to another trolley wire and where there is a pull-off, as compared to the other spots. These spots are called "hard spots of a trolley wire."

When passing these hard spots of a trolley wire, a pantograph, which is a current collector placed on the roof of a car and configured to slide on the trolley wire, sinks abruptly in some cases due to the weight of the trolley wire. In this case, the trolley wire loses its contact with the pantograph and causes a discharge phenomenon called arc discharge. In this event, the trolley wire is locally worn away due to the heat produced by the arc discharge. Thus, the trolley wire is thought to be worn away faster at hard spots than at the other spots.

In view of the above, detecting hard spots of trolley wires has been an important matter in maintaining, operating, and managing electric railway facilities.

As mentioned above, the pantograph accelerates greatly in the vertical direction at hard spots of the trolley wire. For this reason, the vertical acceleration of the pantograph whose displacement is equivalent to that of the trolley wire shall be monitored in order to detect the hard spots of the trolley wire. The acceleration of the pantograph can be found by measuring the displacement of the pantograph and performing second order differentiation on the displacement.

The following methods have conventionally been known as pantograph displacement measuring methods.

(A) Laser Sensor Method

This method is a method in which the displacement of a pantograph is measured by: scanning the pantograph with laser by using a mirror or the like; and studying the phase difference between reflected waves, the deformation of the shape of reflected laser, or the like.

(B) Light Section Sensor Method

This method is a method in which the displacement of a pantograph is measured by: projecting stripe-pattern light onto the pantograph; and receiving light with zigzag streaks which correspond to the shape of the pantograph.

(C) Image Processing Method

This method is a method in which the displacement of a pantograph is measured by: capturing an image of the pantograph by use of a line sensor camera placed on the roof of a car; and then performing processing such as model matching or pattern matching on the captured image by use of a processing computer (see Patent Documents 1 and 2, for example).

Among the methods listed above, the image processing method is such that: from the image of the pantograph captured by the line sensor camera, a pixel position on the image is extracted at which a beforehand-prepared model of the pantograph finds a match; then, the actual height of the pantograph is calculated from the pixel position on the image on the basis of the distance from the line sensor camera to the pantograph, the focal length of the lens of the image capturing unit, and the like.

In this image processing method, a pixel position at which the pre-acquired model of the pantograph finds a match is detected from the captured image of the pantograph as the position of the pantograph. Alternatively, a marker in a black and white stripe pattern is attached to the pantograph placed on the roof of a car, and pattern matching is performed to detect the position of the marker, i.e., the position of the pantograph, from an image captured by the line sensor camera.

Then, after the position of the pantograph in the image is detected, the pixel position in the image is converted into the actual displacement of the pantograph on the basis of the distance to the pantograph, the focal length of the lens, and the like. Then, by performing second order differentiation on the displacement of the pantograph thus found, the acceleration is calculated. Meanwhile, as described in Patent Document 2, using a line sensor camera can increase the spatial resolution and thus improve the accuracy. This method allows the device to be smaller than those in the laser sensor method and the light section sensor method, hence bringing about an advantage that the device can be mounted not only on inspection cars manufactured exclusively for the measurement but also on business cars.

Patent Document 2 discloses a displacement measuring device and method for a pantograph having in common with the present invention the features in the pre-characterizing portions of the independent claims.

PRIOR ART DOCUMENTS

PATENT DOCUMENTS

PATENT DOCUMENT 1: Japanese Patent Application Publication No. 2006-250774
PATENT DOCUMENT 2: Japanese Patent Application Publication No. 2008-104312

SUMMARY OF THE INVENTION

PROBLEM TO BE SOLVED BY THE INVENTION

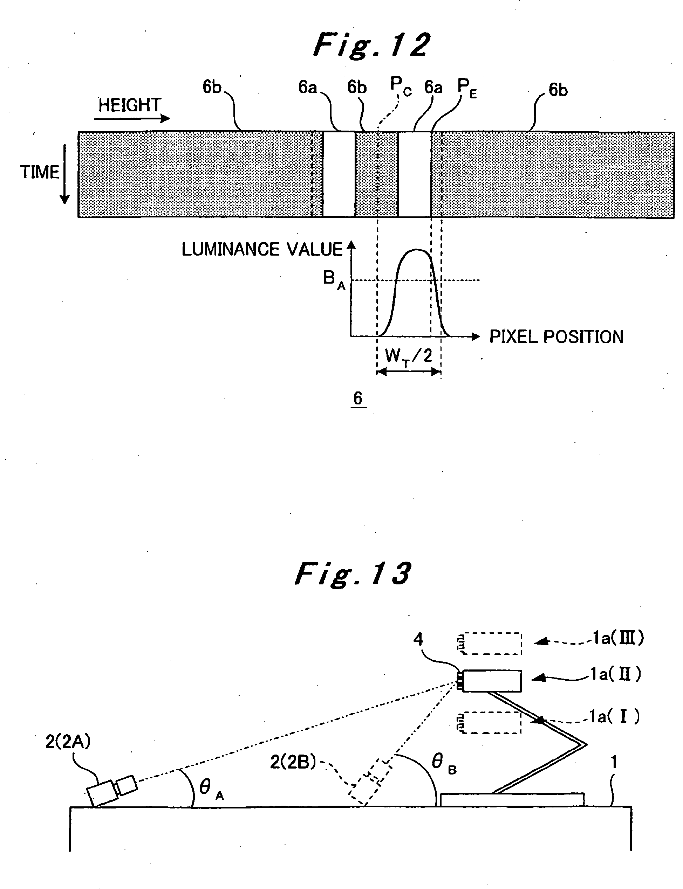

Note that in the method using a line sensor camera, as shown in Fig. 13, a line sensor camera 2 is placed on the roof of a car 1 in such a posture as to face obliquely upward in order to capture a marker 4 attached to a pantograph 1a.

Here, as shown in Fig. 13, a camera elevation angle $\theta_A$ of the line sensor camera 2 is small when the distance from the line sensor camera 2 to the pantograph 1a is long. On the other hand, a camera elevation angle $\theta_B$ of the line sensor camera 2 is large when the distance from the line sensor camera 2 to the pantograph 1a is short. In the following, the line sensor camera illustrated with a solid line and the line sensor camera 2 illustrated with a broken line in Fig. 13 will be referred to as line sensor cameras 2A and 2B, respectively.

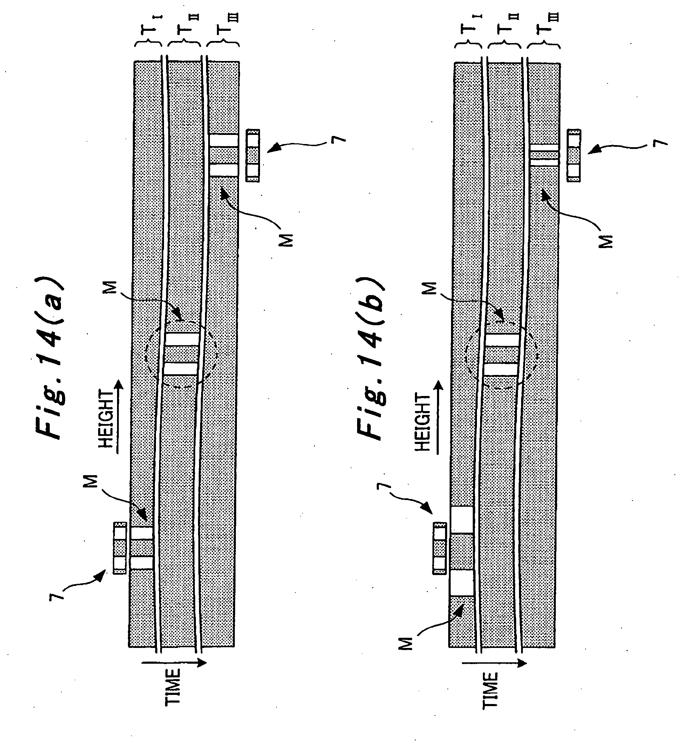

Parts (a) and (b) of Fig. 14 show example input images of the marker 4 captured by the line sensor cameras 2A and 2B, respectively. In a case of using the line sensor camera 2A, the small camera elevation angle $\theta_A$ allows the width of a trace M of the marker to remain substantially the same in an input image 6A as shown in Part (a) of Fig. 14, showing that different heights of the pantograph 1a will cause almost no resolution difference. In contrast, in a case of using the line sensor camera 2B, the large camera elevation angle $\theta_B$ makes the trace M of the marker appear differently depending on the height as shown in Part (b) of Fig. 14, showing that different heights of the pantograph 1a cause a resolution difference in an input image 6B.

Note that in Fig. 14, an image corresponding to a time range $T_I$ shows the pantograph 1a at a I position shown in Fig. 13; an image corresponding to a time range $T_{II}$ shows the pantograph 1a at a II position shown in Fig. 13; and an image corresponding to a time range $T_{III}$ shows the pantograph 1a at a III position shown in Fig. 13.

Assume for example that an image of the marker 4 as indicated by broken-line circles in Fig. 14 is acquired as a pattern-matching template 7 when the pantograph 1a is at the position denoted by II (= time range $T_{II}$). In this case, performing pattern matching processing on an image 6A captured by the line sensor camera 2A is highly likely to result in successful pattern matching as shown in Part (a) of Fig. 14. On the other hand, performing pattern matching processing on an image 6B captured by the line sensor camera 2B can possibly cause a problem of finding no match to the size of the template 7 as shown in Part (b) of Fig. 14 and failing the pattern matching.

In view of the above, the present invention is characterized by providing a device for measuring displacement of a pantograph and a method for detecting a hard spot of a trolley wire which can improve the accuracy of pattern-matching processing.

MEANS FOR SOLVING THE PROBLEM

The device for measuring displacement of a pantograph and the method for detecting a hard spot of a trolley wire according to the present invention are defined in the independent claims. Further advantageous features are set out in the dependent claims.

Note that the "calibration means" mentioned in the independent claims refers to means using a calibration method in Japanese Patent Application No. 2009-011648, for example, to find the resolution of each pixel.

Note that the term "rough" used in the claims refers to such an extent that the marker center position can be detected in the pattern-matching processing within a range within which no error occurs in the matching results.

EFFECTS OF THE INVENTION

By automatically finding an appropriate number of divided image sections and performing appropriate pattern-matching processing, the device for measuring displacement of a pantograph of the invention allows the pixel position of the marker to be detected highly accurately, and therefore a hard spot of a trolley wire can be found.

Moreover, according to a device for measuring displacement of a pantograph related to the present invention, the pattern-matching processing means could perform pattern-matching processing only on a predetermined range of the input image on the basis of a result of pattern-matching processing having been performed on an immediately previous line. Accordingly, it is possible to shorten the processing time and also to lower the probability of detecting noises and the like.

Further, according to the device for measuring displacement of a pantograph of the present invention, it is possible to efficiently perform the pattern-matching processing by setting the shifting pitch of the template lower in a case of a higher correlation value than in a case of a lower correlation value.

Furthermore, according to the device for measuring displacement of a pantograph of the present invention, if a trace of the marker in the input image lies over any two adjacent ones of the sections, the pattern-matching processing means may automatically correct positions of the sections such that the trace of the marker is included within one of the sections on the basis of the position of the marker detected in an immediately previous line. Accordingly, it is possible to efficiently perform the pattern-matching processing by preventing the occurrence of the switching of the template within the processing range of the pattern matching attributable to the presence of a partitioning position within the processing range.

In addition, according to the device for measuring displacement of a pantograph of the present invention, the pattern-matching processing means may detect a rough center position of a trace of the marker, calculate an average luminance value of a range starting from the center position and having half a width of the template, and extract the trace of the marker by using the average luminance value as a threshold. Accordingly, it is possible to avoid an error at a partitioning position in the image by preventing the offset between the pattern matching results by several pixels attributable to the changing of the template size at the partitioning position. It is also possible to perform stable edge extraction even when the luminance of the whole image changes.

By automatically finding an appropriate number of divided image sections and performing appropriate pattern-matching processing, the method for detecting a hard spot of a trolley wire of the present invention allows the pixel position of the marker to be detected highly accurately, and therefore a hard spot of a trolley wire can be found.

Besides, according to a method for detecting a hard spot of a trolley wire related to the present invention, the fifth step could be performed only on a predetermined range of the input image on the basis of a result of pattern-matching processing having been performed on an immediately previous line. Accordingly, it is possible to shorten the processing time and also to lower the probability of detecting noises and the like.

Moreover, according to the method for detecting a hard spot of a trolley wire of the present invention, it is possible to efficiently perform the pattern-matching processing by setting the shifting pitch of the template lower in a case of a higher correlation value but setting the shifting pitch of the template higher in a case of a lower correlation value.

Further, according to the method for detecting a hard spot of a trolley wire of the present invention, if a trace of the marker in the input image lies over any two adjacent ones of the sections, the fifth step may be performed by automatically correcting positions of the sections such that the trace of the marker is included within one of the sections on the basis of a position of the marker detected in the immediately previous line. Accordingly, it is possible to efficiently perform the pattern-matching processing by preventing the occurrence of the switching of the template within the processing range of the pattern matching attributable to the presence of a partitioning position within the processing range.

Furthermore, according to the method for detecting a hard spot of a trolley wire of the present invention, the fifth step may be performed by detecting a rough center position of a trace of the marker, calculating an average luminance value of a range starting from the center position and having half a width of the template, and using the average luminance value as a threshold. Accordingly, it is possible to avoid an error at a partitioning position in the image by preventing the offset between the pattern matching results by several pixels attributable to the changing of the template size at the partitioning position. It is also possible to perform stable edge extraction even when the luminance of the whole image changes.

BRIEF DESCRIPTION OF THE DRAWINGS

[Fig. 1] Fig. 1 is an explanatory diagram showing an example of the placement of a device for measuring displacement of a pantograph of Embodiment 1 of the present invention.
[Fig. 2] Fig. 2 is a front view of a marker of the device for measuring displacement of a pantograph of Embodiment 1 of the present invention.

[Fig. 3] Fig. 3 is a block diagram showing a schematic configuration of the device for measuring displacement of a pantograph of Embodiment 1 of the present invention.

[Fig. 4] Fig. 4 is an explanatory diagram showing an example of an input image in Embodiment 1 of the present invention.

[Fig. 5] Fig. 5 is an explanatory diagram showing an example of a template in Embodiment 1 of the present invention.

[Fig. 6] Fig. 6 is an explanatory diagram showing an example of dividing an image in Embodiment 1 of the present invention.

[Fig. 7] Fig. 7 is a flowchart showing the flow of pantograph measurement processing of Embodiment 1 of the present invention.

[Fig. 8] Fig. 8 is an explanatory diagram showing levels of a value of correlation to the template in an input image in Embodiment 3 of the present invention.

[Fig. 9] Fig. 9 is an explanatory diagram showing an example of a case where a partitioning position is present within a processing range of pattern matching in Embodiment 4 of the present invention.

[Fig. 10] Fig. 10 is an explanatory diagram showing an example of re-setting the partitioning position shown in Fig. 9.

[Fig. 11] Fig. 11 is an explanatory diagram showing an example of template sizes set to their respective sections in Embodiment 5 of the present invention.

[Fig. 12] Fig. 12 is an explanatory diagram showing an example of extracting an edge of one of white regions representing traces of white portions of the marker in an input image in Embodiment 5 of the present invention.

[Fig. 13] Fig. 13 is an explanatory diagram showing an example of the placement of a device for measuring displacement of a pantograph.

[Fig. 14] Part (a) of Fig. 14 is an explanatory diagram showing an example of an input image in a case where the elevation angle of a line sensor camera is small, and Part (b) of Fig. 14 is an explanatory diagram showing an example of an input image in a case where the elevation angle of the line sensor camera is large.

MODES FOR CARRYING OUT THE INVENTION

Hereinbelow, by referring to the drawings, description will be given of details of a method using image processing of the present invention to improve the accuracy of pattern matching in measurement of a hard spot of a trolley wire.

Embodiment 1

(Pattern Matching Using Template Scaled for Each Section of Image)

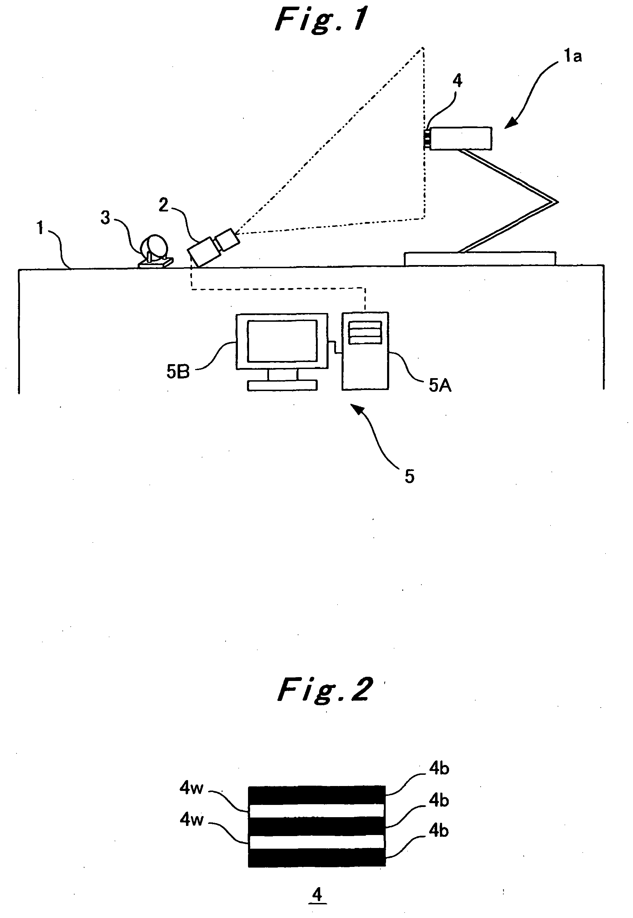

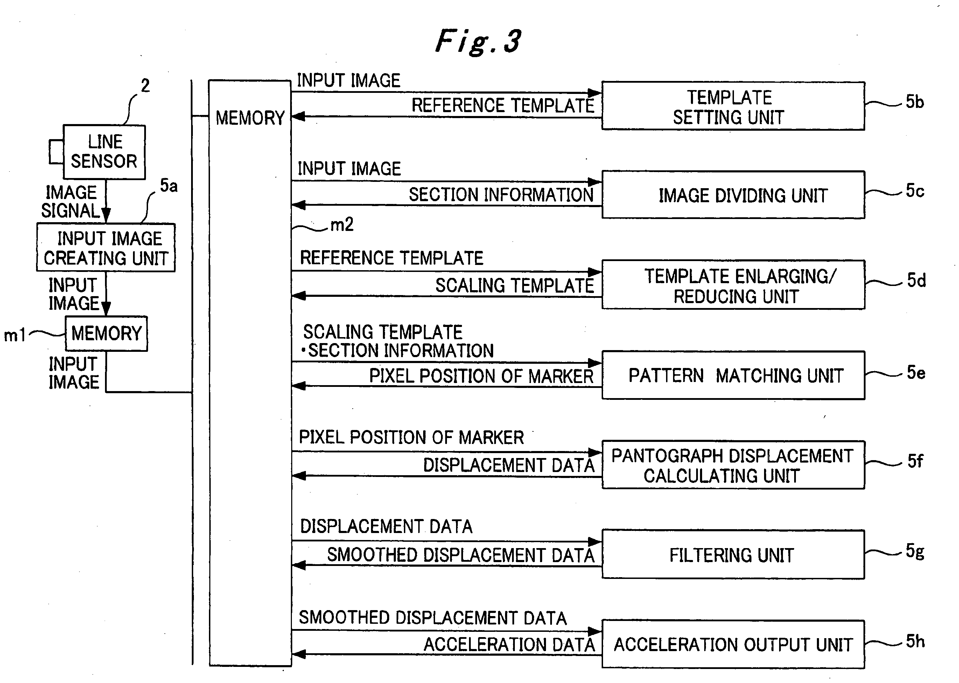

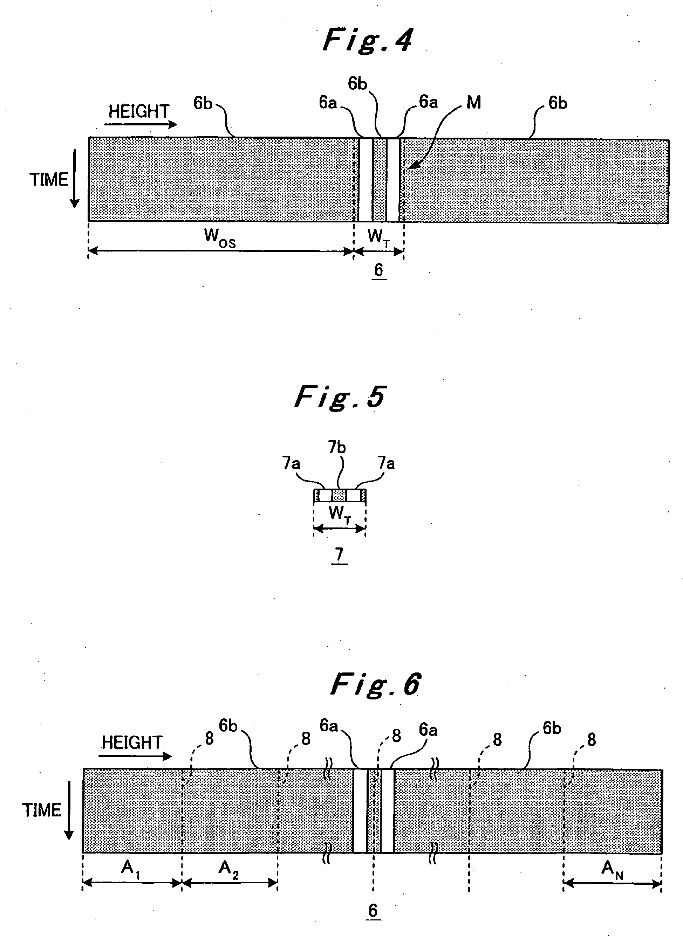

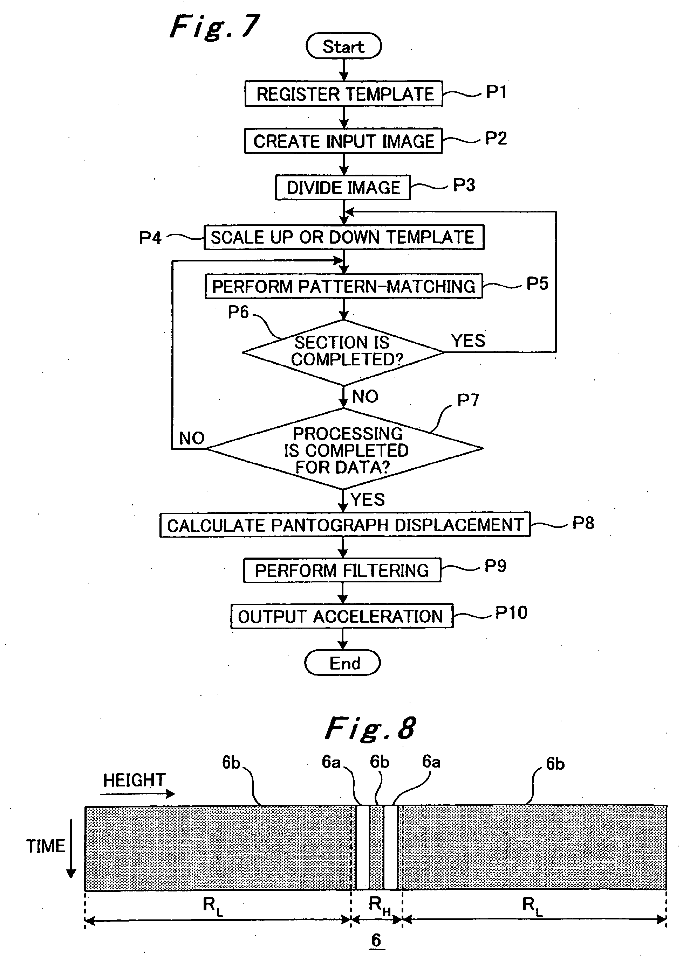

A first embodiment of a device for measuring displacement of a pantograph of the present invention will be described using Figs. 1 to 7. Fig. 1 is an explanatory diagram showing an example of the placement of a device for measuring displacement of a pantograph of Embodiment 1 of the present invention. Fig. 2 is a front view of a marker of the device for measuring displacement of a pantograph of Embodiment 1 of the present invention. Fig. 3 is a block diagram showing a schematic configuration of the device for measuring displacement of a pantograph of Embodiment 1 of the present invention. Fig. 4 is an explanatory diagram showing an example of an input image in Embodiment 1 of the present invention. Fig. 5 is an explanatory diagram showing an example of a template in Embodiment 1 of the present invention. Fig. 6 is an explanatory diagram showing an example of dividing an image in Embodiment 1 of the present invention. Fig. 7 is a flowchart showing the flow of pantograph measurement processing of Embodiment 1 of the present invention.

As shown in Fig. 1, the pantograph height measuring device in this embodiment includes a line sensor camera 2 as image capturing means fixed to the roof of a car 1, a lighting device 3, a marker 4, and a processing computer 5 placed inside the car 1.

The line sensor camera 2 is placed on the roof of the car 1 in such a way as to capture images of a pantograph 1a. Specifically, the orientation of the line sensor camera 2 is set such that: the optical axis thereof can be directed obliquely upward; and the scanning-line direction thereof can be orthogonal to the longitudinal direction of the pantograph 1a. Image signals acquired by this line sensor camera 2 are inputted into the processing computer 5.

The orientation and illuminating angle of the lighting device 3 are set such that a spot to be captured by the line sensor camera 2 can be illuminated with light.

The marker 4 is formed of a light-reflective material and a non-light-reflective material, and may be placed at any position on the line sensor camera 2-side end surface of the pantograph 1a within a range within which the line sensor camera 2 can capture the marker 4. As shown in Fig. 2, the marker 4 used in this embodiment is formed by alternately arranging two white portions 4w made of the light-reflective material and three black portions 4b made of the non-light-reflective material. Any size can be selected for the marker 4.

The processing computer 5 detects the vertical displacement of the pantograph 1a by analyzing an image inputted from the line sensor camera 2, and includes an arithmetic processing unit 5A as arithmetic processing means and a monitor 5B.

As shown in Fig. 3, the arithmetic processing unit 5A includes an input image creating unit 5a, a template setting unit 5b, an image dividing unit 5c, a template enlarging/reducing unit 5d, a pattern matching unit 5e, a pantograph displacement calculating unit 5f, a filtering unit 5g, an acceleration output unit 5h, and memories m1 and m2.

The input image creating unit 5a as input image creating means creates an input image 6 as shown in Fig. 4 in which image signals inputted from the line sensor camera 2 are arranged in chronological order. As shown in Fig. 4, since the marker 4 reflects light of the lighting device 3, the traces of the white portions of the marker 4 are displayed in the input image 6 as strip-shaped white regions 6a in a black region (a portion indicated with dotted lines in the drawing) 6b. The input image 6 is sent to the template setting unit 5b or the image dividing unit 5c through the memories m1 and m2 as needed.

The template setting unit 5b as template setting means acquires in advance a marker pattern as shown in Fig. 5 as a matching template (hereinafter, referred to as reference template) 7A from an input image 6 as shown in Fig. 4. To be specific, the template setting unit 5b acquires in advance a marker pattern as the reference template 7A to be used for the extraction of the marker 4 in the input image 6 in processing of the pattern matching unit 5e, and then registers the marker pattern to the memory m2. The reference template 7A is sent to the template enlarging/reducing unit 5d through the memory m2.

As shown in Fig. 5, the reference template 7A is one-dimensional luminance data of white regions 7a and black regions 7b obtained by extracting the marker portion from an image acquired in advance for the purpose of creating the reference template 7A. It is desirable to cut the image in such a way that the reference template 7A partially includes a black portion 4b of the marker 4 on the outer side of each white portion 4w as shown in Fig. 5, rather than cutting the image at the boundary of the white portion 4w and the black portion 4b on the outer side. Doing so increases the feature amount of the reference template 7A and therefore reduces erroneous detections. Note that the template setting unit 5b registers the reference template 7A and also an offset width $W_{OS}$ and a template size $W_T$ (see Fig. 4) at the same time.

The image dividing unit 5c as image-division processing means provides partitioning positions 8 as shown in Fig. 6 in the input image 6 inputted from the input image creating unit 5a to thereby divide the input image 6 into a predetermined number of sections $A_1$, $A_2$, ..., $A_N$ (hereinafter, a given section (s) will be referred to as a section(s) $A_i$). Information on all the sections $A_i$ is sent to the template enlarging/reducing unit 5d through the memory m2. In this event, the number N of sections is automatically calculated based on the resolution of each pixel found in advance by use of a calibration method in Japanese Patent Application No. 2009-011648, for example. The number N of sections is set such that the section with the lowest resolution will not have a resolution 1.1 or more times larger than that of the section with the highest resolution. In this way, the resolutions can be calculated accurately.

Meanwhile, in this embodiment, the number N of sections is set such that the section with the lowest resolution will not have a resolution 1.1 or more times larger than that of the section with the highest resolution, for a reason that is based on the result of a verification test on the template size $W_T$. Specifically, the number N of sections is based on the result of a test in which the size $W_T$ of the reference template 7A acquired from an image capturing the marker 4 is varied to find out to what extent the reference template 7A is allowed to be scaled up and down before failing to get a successful match in pattern matching performed on the image from which the reference template 7A is acquired.

The template enlarging/reducing unit 5d as template scaling processing means performs processing to scale up or down the reference template 7A to change its size $W_T$ for each section $A_i$ on the basis of the reference template 7A inputted from the template setting unit 5b and the information on the section $A_i$ inputted from the image dividing unit 5c. Data on each template $7B_i$ with its size $W_T$ thus changed for the corresponding section $A_i$ (hereinafter, referred to as scaled template) is sent to the pattern matching unit 5e through the memory m2.

To be specific, the template enlarging/reducing unit 5d creates the scaled temples $7B_i$ corresponding to the sections $A_i$ by: calculating a factor by which the reference template 7A is scaled (hereinafter, referred to as scale factor) for each section $A_i$; and scaling up or down the reference template 7A through bilinear interpolation which is a common technique for scaling an image. Since the size $W_T$ of the reference template 7A is registered at the time of registering the reference template 7A, a size $W_{Ti}$ of the scaled template $7B_i$ can be found by multiplying the size $W_T$ of the reference template 7A by the corresponding scale factor.

Here, each scale factor is found from the following expressions (1) to (3). Note that an expression obtained by a calibration method in Japanese Patent Application No. 2009-011648, for example, is used as an approximate expression (4) for converting a pixel position in an image into an actual height.

$$P_n = \left[a(n+1)^2 + b(n+1) + c\right] - \left(an^2 + bn + c\right) \quad \cdots (1)$$

$$P_{ori} = \left[ a(ori+1)^2 + b(ori+1) + c \right] - \left[ a(ori)^2 + b(ori) + c \right] \quad \cdots (2)$$

$$scale = P_{ori} / P_n \quad \cdots (3)$$

$$y = ax^2 + bx + c \quad \cdots (4)$$

where "a," "b," and "c" are coefficients of the approximate expression (4) for finding actual displacement from a pixel position; "$p_n$" is a resolution [mm/pix] at a pixel position n to be scaled up or down; "$p_{ori}$" is a resolution [mm/pix] at a pixel position ori on the reference template 7A; and "scale" is the scale factor.

In this embodiment, the resolution can be found as a height [mm] per pixel. Specifically, the resolution [mm/pix] can be found by finding a height [mm] at a pixel position n and a height [mm] at a pixel position n+1 next thereto and then subtracting the height at the pixel position n from the height at the pixel position n+1.

Note that, needless to say, the scale factor is set to 1 when the size $W_{Ti}$ of the scaled template $7B_i$ is equal to the size $W_T$ of the reference template 7A.

The pattern matching unit 5e as pattern-matching processing means detects the pixel position of the marker 4 in the input image 6 by performing pattern-matching processing for each section $A_i$ on the basis of the information on the section $A_i$ inputted from the image dividing unit 5c and the data on the corresponding scaled template $7B_i$ inputted from the template enlarging/reducing unit 5d. The pixel position of the marker 4 obtained by the pattern matching unit 5e is sent to the pantograph displacement calculating unit 5f through the memory m2.

The pantograph displacement calculating unit 5f as pantograph displacement calculating means converts the displacement of the marker 4 in the input image 6 into the actual displacement of the pantograph 1a on the basis of the pixel position of the marker 4 in the input image 6 inputted from the pattern matching unit 5e. Note that an approximate expression obtainable for example from Japanese Patent Application No. 2009-011648 or the like is found in advance and used as a calculation expression for converting the displacement of the trace of the pantograph 1a in the input image 6 into the actual displacement of the pantograph 1a. Data on the actual displacement of the pantograph 1a obtained by the pantograph displacement calculating unit 5f is sent to the filtering unit 5g through the memory m2.

The filtering unit 5g as filtering processing means performs smoothing processing on the displacement data inputted from the pantograph displacement calculating unit 5f. The actual displacement of the pantograph 1a is in a state of containing quantization errors of the image. Hence, the actual displacement data is subjected to filtering processing to smooth the displacement data. As a result, the quantization errors contained in the displacement data are reduced. The displacement data after the smoothing (hereinafter, referred to as smoothed displacement data) is sent to the acceleration output unit 5h through the memory m2.

The acceleration output unit 5h as acceleration outputting means performs second order differentiation on the smoothed displacement data inputted from the filtering unit 5g to calculate the acceleration of the marker 4, i.e., the pantograph 1a, in the vertical direction. To be specific, the acceleration is found by performing second order differentiation on the displacement data smoothed by the filtering processing and then outputted to the monitor 5B. In this event, a point where the acceleration of the pantograph 1a is 20 G or greater, for example, is detected as a hard spot in this embodiment. The calculated acceleration data is outputted to the monitor 5B through the memory m2 and displayed on the monitor 5B.

Hereinbelow, based on Fig. 7, a brief description will be given of the flow of trolley-wire hard-spot detection processing performed in the processing computer 5 of this embodiment.

As shown in Fig. 7, in the processing computer 5, the template setting unit 5b first performs the processing to register a reference template 7A (step P1). Then, the input image creating unit 5a performs the processing to create an input image 6 in which image signals outputted from the line sensor camera 2 are arranged in chronological order (step P2). Thereafter, as shown in Fig. 6, the image dividing unit 5c performs the processing to divide the input image 6 into a predetermined number N of sections $A_1$, $A_2$, ..., $A_N$ (step P3).

Then, the template enlarging/reducing unit 5d performs the processing to scale up or down the reference template 7A registered in step P1 for a given section $A_i$ (step P4). Then, the pattern matching unit 5e performs the pattern-matching processing to compare a scaled template $7B_i$, obtained by scaling up or down the reference template 7A for the section $A_i$ of the input image 6, with the input image 6 in attempt to detect the position (pixel position) of the marker 4 in the input image 6 (step 5). Thereafter, it is judged whether or not the pattern matching for the section $A_i$ is completed (step P6). The processing proceeds to step P7 if the judgment result shows that the pattern-matching process-

ing for the section $A_i$ is not yet completed (NO). On the other hand, the processing returns to step P4 if the pattern-matching processing for the section $A_i$ is completed (YES).

In step P7, it is judged whether or not the pattern-matching processing is completed for the entire data of the input image. The processing proceeds to step S8 if the judgment result shows that the pattern-matching processing is completed for the entire data of the input image (YES). On the other hand, the processing returns to step P5 if the pattern-matching processing is not yet completed for the entire data of the input image (NO).

In step P8, the pantograph displacement calculating unit 5f performs the processing to convert the pixel position of the marker 4 in the input image 6 into the actual displacement of the pantograph 1a on the basis of the detected marker position, for the entire input image 6.

Then, the filtering unit 5g performs the filtering processing (step P9). Lastly, the acceleration output unit 5h performs the processing to output the acceleration of the pantograph (step P10).

In the device for measuring displacement of a pantograph of this embodiment configured as above, an input image 6 captured at a large camera elevation angle $\theta_B$ as shown in Part (b) of Fig. 13 is divided into the predetermined number N of sections $A_1$, $A_2$, ..., $A_N$ as shown in Fig. 6, and then the pattern-matching processing is performed using the scaled templates $7B_i$ obtained by scaling up or down the reference template 7A on the basis of the resolutions of the respective sections $A_i$. Accordingly, highly accurate pattern-matching processing can be performed. Moreover, utilizing a calibration result allows accurate calculation of the resolution of each pixel of parts where the calibration is performed.

Embodiment 2

(Shortening Processing Time by Reducing Processing Range of Pattern Matching)

A second embodiment of the device for measuring displacement of a pantograph of the present invention will be described. This embodiment differs from Embodiment 1 in the processing of the pattern matching unit 5e. The other configurations are substantially the same as those described in Embodiment 1. In the following, the processing units providing the same effects will be denoted by the same reference numerals, and overlapping descriptions will be omitted. The differences will be mainly described.

In this embodiment, the following processing is performed as the processing in step P5 shown in Fig. 7.

First, the same pattern-matching processing as Embodiment 1 is performed on the first line of an input image 6, and the detected marker position is stored in the memory m2. Thereafter, the pattern-matching processing is performed on the second and subsequent lines but only within a range of $\pm N_P$[pix] from the pixel position of the marker obtained as a result of the pattern-matching processing on the immediately previous line.

In sum, once the trace of the marker 4 is detected in the input image 6, the next line is subjected to the pattern-matching processing only within a predetermined range from the pixel position of the marker 4. Here, the range $\pm N_P$[pix] to be subjected to the pattern-matching processing is determined by taking into account of the distance of movement of the marker (the distance of vertical displacement of the pantograph) per unit time in the image capturing using the line sensor camera 2.

Specifically, "Conventional Railway Structure Regulation Section 62" states that in an area where a train travels at a speed faster than 50 km/h, the inclination of a trolley wire must be 5/1000 or smaller in a case where the trolley wire is suspended from a catenary or an overhead rigid conductor line, and be 15/1000 or smaller otherwise. An inclination of 5/1000 means a 5-m change in height over a distance of 1000 m.

Now, let us explain this while assuming that the sampling frequency of the line sensor camera 2 is set to 1000 Hz (an image containing 1000 lines is captured in 1 second (1-ms intervals)). When the car 1 travels at a speed of 50 km/h, for example, the car 1 advances a distance of approximately 13. 888 m per second, which is approximately 0.013888 m per microsecond. Then, in a case where the pantograph 1a is displaced vertically with an inclination of 15/1000, the height of the pantograph changes by approximately 0.00021 mm per unit time (1 ms).

In this embodiment, a reference acceleration for detecting a hard spot is set to 20 G. This is an acceleration for a case assuming a 0.1-mm change per unit time (1 ms). Given "Conventional Railway Structure Regulation Section 62" mentioned above, a 10-mm change per unit time should be large enough. So, with reference to the pixel position of the marker 4 detected in the immediately previous line, a pixel width $N_P$[pix] is calculated which assumes a 10-mm change per microsecond based on the image resolution, and the corresponding range is set as the range to be subjected to the pattern matching. This embodiment shows an example assuming a 10-mm change per unit time as a condition for calculating the pixel width $N_P$[pix]. Note, however, that the condition for calculating the pixel width $N_P$[pix] is not limited thereto. Any condition may be set when necessary.

When the line sensor camera 2 captures images of the pantograph 1a, the distance of the vertical displacement of the pantograph 1a per unit time of the image capturing is small, and therefore the distance of the movement of the marker 4 is small as well. Thus, once the pixel position of the marker 4 detected through the pattern-matching processing, the subsequent pattern-matching processing should be performed within a range of $\pm N_P$[pix] from that position. Given that the width of the input image 6 captured by the line sensor camera 2 is "WIDTH," a time t required for completing the pattern-matching processing in this embodiment can be expressed in the following expression (5) using a time t0 required for completing the pattern-matching processing in Embodiment 1.

[Formula 1]

$$t = \frac{2M}{WIDTH} \cdot t_0 \quad \cdots (5)$$

As described, in the device for measuring displacement of a pantograph of this embodiment, the pattern-matching processing is performed only within a range of $\pm N_P$[pix] from the pixel position of the marker 4 in the immediately previous line detected by pattern matching. Accordingly, the processing time can be shortened as compared to Embodiment 1. Further, narrowing the range to be subjected to the pattern-matching processing can lower the possibility of detecting noises and the like.

Embodiment 3

(Shortening Processing Time by Changing Pitch at Which to Shift Template on the Basis of Correlation Value)

A third embodiment of the device for measuring displacement of a pantograph of the present invention will be described by use of Fig. 8. Fig. 8 is an explanatory diagram showing levels of a value of correlation to the template in an input image.

This embodiment differs from Embodiment 1 in the processing of the pattern matching unit 5e. The other configurations are substantially the same as those described in Embodiment 1. In the following, the processing units providing the same effects as the foregoing configurations shown in Figs. 1 to 7 will be denoted by the same reference numerals, and overlapping descriptions will be omitted. The differences will be mainly described.

As shown in Fig. 8, a value R of correlation between the input image 6 and the scaled template $7B_i$ is highest ($R = R_H$) in a part including the trace of the marker captured in the input image 6 and is low ($R = R_L$) in the other parts. Moreover, the part in which the marker 4 is captured dominates merely one part of the actual input image 6.

Thus, in this embodiment, in pattern matching on the input image 6 shown in Fig. 8, correlation values R are first calculated as indexes each representing the degree of resemblance to the registered reference template 7A, and then the pattern-matching processing is performed while the pitch at which to shift the scaled template $7B_i$ is changed in accordance with the corresponding correlation value R.

Specifically, in this embodiment, the following processing is performed as the processing in step S5 shown in Fig. 7 at timing before performing the processing in step P5 described in Embodiment 1.

First, the correlation value R to the reference template 7A is calculated for each pixel position i in the input image 6. The correlation value R can be found through calculation using the following expression (6). Note that the calculation is targeting one-dimensional correlation because the line sensor camera 2 is a camera to capture one-dimensional images.

[Formula 2]

$$R = \frac{\sum_{i=1}^{L} (W_i \times T_i)}{\sqrt{\sum_{i=1}^{L} (W_i)^2} \cdot \sqrt{\sum_{i=1}^{L} (T_i)^2}} \quad \cdots (6)$$

Here, R is the correlation value; L is the width of the template image (set to be smaller than the width of the search image) ; $W_i$ is a luminance value at the pixel position i in the search image; and $T_i$ is a luminance value at the pixel position i in the template image.

Next, the pitch at which to shift the scaled template $7B_i$ during the pattern-matching processing is set in accordance with the correlation value R. To be specific, the shifting pitch of the scaled template $7B_i$ is set such that the scaled template $7B_i$ will shift shorter during the pattern-matching processing on a part having a higher correlation value R than during the pattern-matching processing on a part having a lower correlation value R.

The correlation value is 1 at the maximum and 0 at the minimum. In the pattern-matching processing of this embodiment, the correlation value R may be about 0.8 in a part having a low correlation and about 0.99 in a part having a high correlation, for example. In this respect, the shifting pitch of the scaled template $7B_i$ during the pattern-matching processing can be set on the basis of the correlation value R in the following way. The shifting pitch of the scaled template $7B_i$ is increased by 1 [pix] upon increase of the correlation value R by 0.05 so that the shifting pitch is 1 [pix] when the correlation value R is 0.95 or higher while the shifting pitch is 2 [pix] when the correlation value R is 0.9 to 0.85.

In this embodiment, the processing in step P5 described in Embodiment 1 is performed after the shifting pitch of the scaled template $7B_i$ is set as mentioned above.

Note that a threshold of the correlation value R (0.05 in this embodiment) for changing the shifting pitch is set manually. In addition, the shifting pitch of the scaled template $7B_i$ is not limited to those mentioned above and may be set to any values as needed.

In the device for measuring displacement of a pantograph of this embodiment configured as above, the shifting pitch is changed on the basis of the level of the correlation value R, and therefore the pattern-matching processing can be performed more efficiently than Embodiment 1 in which the pattern-matching processing is performed on a pixel basis.

Embodiment 4

(Improving Efficiency of Processing at Partitioning Position in Image)

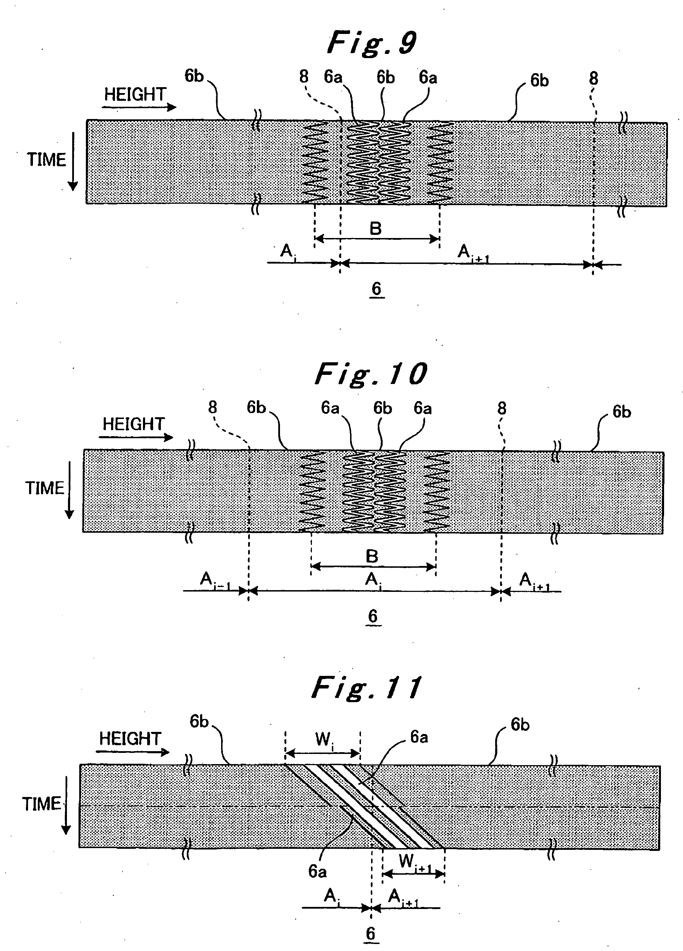

A fourth embodiment of the device for measuring displacement of a pantograph of the present invention will be described by use of Figs. 9 and 10. Fig. 9 is an explanatory diagram showing an example of a case where a partitioning position is present within a processing range of pattern matching. Fig. 10 is an explanatory diagram showing an example of re-setting the partitioning position shown in Fig. 9. Fig. 10 is an explanatory diagram showing an example of re-setting the partitioning position shown in Fig. 9.

This embodiment differs from Embodiments 1 and 2 in a method of the processing in step P5 shown in Fig. 7. The other configurations are substantially the same as those described in Embodiments 1 and 2. In the following, the processing units providing the same effects as the foregoing configurations described in Embodiments 1 and 2 will be denoted by the same reference numerals, and overlapping descriptions will be omitted. The differences will be mainly described.

Embodiment 2 mentioned above attempts to improve the processing efficiency by limiting the processing range of the pattern matching on the basis of the pixel position of the marker 4 detected by the pattern-matching processing on the immediately previous line. However, in Embodiment 2, a partitioning position 8 may be present within a processing range B of the pattern matching in the input image 6 as shown in Fig. 9 (a range of $\pm N_P$[pix] from the pixel position of the marker 4 obtained through the pattern-matching processing on the previous line). In this case, the scale factor of the scaled template $7B_i$ needs to be switched for the two sections (the sections $A_i$ and $A_{i+1}$ in this embodiment).

To solve this, in this embodiment, if a partitioning position 8 is included in the processing range B of the patter matching as shown in Fig. 9 at the time of performing the pattern-matching processing, processing is performed so that: all the partitioning positions 8 can be automatically re-set to exclude the partitioning position 8 from the processing range B; and the size of each scaled template $7B_i$ can be re-set to be adjusted to its corresponding newly-set section $A_i$.

Specifically, in this embodiment, the following processing is performed as the processing in the foregoing step P5 shown in Fig. 7. First, the same pattern-matching processing as Embodiment 1 is performed on the first line of an input image 6, and the pixel position of the detected marker 4 is stored in the memory m2. Thereafter, for the second and subsequent lines, a range of $\pm N_P$[pix] from the pixel position of the marker 4 detected through the pattern-matching processing on the immediately previous line is set as the processing range B of the pattern matching.

Then, it is checked for a pixel position P [pix] of the marker 4 obtained from the immediately previous line as to whether or not a partitioning position 8 is included in the processing range B of $P \pm N_P$[pix]. If no partitioning position 8 is included, the pattern matching is performed using the same scaled templates $7B_i$ as those of the immediately previous line.

On the other hand, if a partitioning position 8 is included in the range of $P \pm N_P$ [pix], new scaled templates $7B_i$ are set by: re-setting the sections $A_i$ on the basis of the pixel position of the marker 4 obtained from the immediately previous line; and re-calculating the scale factors of the scaled templates $7B_i$ for the re-set sections $A_i$. The pattern-matching processing described in Embodiment 1 is performed after the above processing is performed. Note that the scale factors of the scaled templates $7B_i$ and the partitioning positions 8 are calculated by use of the methods described in Embodiment 1.

Note that in this embodiment, the reference template 7A is set manually, but the scaled templates $7B_i$ are set automatically after this manual setting on the basis of the resolutions of the corresponding image positions.

In the device for measuring displacement of a pantograph of this embodiment mentioned above, if a partitioning position is included in the processing range of the pattern matching, new scaled templates $7B_i$ and partitioning positions 8 are set automatically on the basis of the pixel position of the marker 4 obtained from the immediately previous line so that no partitioning position 8 may be included in the processing range. Accordingly, in addition to the effect of Embodiment 2, this embodiment makes it possible to perform highly efficient pattern-matching processing.

Embodiment 5

(Improving Accuracy of Partitioning Position by Changing Size of Template)

A fifth embodiment of the device for measuring displacement of a pantograph of the present invention will be described by use of Figs. 11 and 12. Fig. 11 is an explanatory diagram showing an example of template sizes set to their respective sections. Fig. 12 is an explanatory diagram showing an example of extracting an edge of one of white regions 6a representing traces of white portions 4w of the marker 4 in an input image.

If a trace M of the marker 4 (hereinafter, referred to as marker trace) crosses the partitioning position 8 between the sections $A_i$ and $A_{i+1}$ as shown in Fig. 11, performing the pattern matching by use of any of the methods of Embodiments 1 to 4 requires the single marker trace M to be subjected to the pattern-matching processing using two scaled templates $7B_i$ and $7B_{i+1}$ for the respective two sections $A_i$ and $A_{i+1}$. As a consequence, the pattern matching results may possibly be offset from each other by several pixels at the partitioning position 8. Offset by several pixels leads to a large error in the calculation of the acceleration.

To solve this, in this embodiment, if the marker trace M crosses the partitioning position 8 between the sections $A_i$ and $A_{i+1}$, the pattern-matching processing is performed in advance by using the scaled template $7B_i$ to detect a rough pixel position of the marker trace M; and then an edge of the marker trace M is extracted on the basis of the detected pixel position of the marker trace M. This prevents the occurrence of an error attributable to the marker trace M crossing the partitioning position 8 between the sections $A_i$ and $A_{i+1}$.

Note that although any threshold can be used to extract the edge of the marker trace M, setting a constant as the threshold may prevent accurate edge extraction when the input image 6 appears dark or bright in whole. For this reason, it is preferable to calculate the average value of luminance in the processing range and set the average value as the threshold. In this way, stable edge extraction can be performed even when the luminance values of the image change in whole.

Specifically, in this embodiment, the following processing is performed as the processing in step P5 shown in Fig. 7.

First, if the marker trace M crosses the partitioning position 8 between the sections $A_i$ and $A_{i+1}$, a rough marker center position $P_C$ is detected through the pattern-matching processing using the scaled template $7B_i$. Thereafter, as shown in Fig. 12, an average value $B_A$ of luminance in a range starting from the marker center position $P_C$ and having half the current template size $W_T$ is calculated. Then, the last pixel position (the highest edge) $P_E$ in a region with higher luminance values than the average luminance value $B_A$ is found, and that position is extracted as the pixel position of the marker trace M.

Note that the term "rough" used in this embodiment refers to a range within which the pattern-matching processing results in the detection of a marker center position that will not cause an error in the matching results. The allowable range of error in the template size $W_T$ is about $\pm 10\%$ experimentally.

In the device for measuring displacement of a pantograph of this embodiment configured as above, a rough marker position is detected through the pattern matching, and then the edge of the marker 4 is extracted on the basis of the detected pixel position of the marker 4. Thus, the template size is not changed at the partitioning position set in the input image 6. This makes it possible to avoid the offset between the pattern matching results attributable to the changing of the template size $W_T$ at the partitioning position in the image, and hence improve the accuracy. Moreover, the average luminance value of the range starting from the marker center position, detected through the pattern matching, and having half the current template size $W_T$ is calculated, and that value is used as the threshold for the edge extraction. Accordingly, stable edge extraction can be performed even when the luminance of the whole input image 6 changes.

INDUSTRIAL APPLICABILITY

The present invention is applicable to devices for measuring displacement of a pantograph and methods for detecting a hard spot of a trolley wire, and is preferably applicable particularly to devices for measuring displacement of a pantograph and methods for detecting a hard spot of a trolley wire in which a hard spot of a trolley wire is measured through pattern-matching processing using an image, captured by a line sensor camera, of a pantograph equipped with a marker designed for measuring a hard spot.

EXPLANATION OF REFERENCE NUMERALS

1 car
2 line sensor camera
3 lighting device
4 marker
4w white portion
4b black portion
5 processing computer
5A arithmetic processing unit
5B monitor
5a input image creating unit
5b template setting unit
5c image dividing unit
5d template enlarging/reducing unit
5e pattern matching unit
5f pantograph displacement calculating unit
5g filtering unit
5h acceleration output unit
6 input image
6a white region
6b black region
7 template
7a white region
7b black region
8 partitioning position
$A_1, A_2, ..., A_i, ..., A_N$ section
$W_T$ template size

## Claims

1. A device for measuring displacement of a pantograph including image capturing means (2) adapted to be placed on a roof of a car (1) for capturing an image of a pantograph (1a), and image processing means (5) for acquiring displacement of the pantograph by performing image processing on an input image captured by the image capturing means,

   wherein the image processing means comprise:

   input image creating means (5a) for creating an input image by using an image signal inputted from the image capturing means;
   template setting means (5b) for acquiring, as a template, a marker pattern obtained by extracting a marker portion from an image acquired in advance;
   image-division processing means (5c) for dividing the input image into a predetermined number of sections on the basis of a resolution of each of pixels obtained by calibration means;
   template scaling processing means (5d) for scaling up or down the template for each of the sections of the input image on the basis of the resolution of the section;
   pattern-matching processing means (5e) for detecting a pixel position of a marker (4) in the input image by using the template and the input image; and
   pantograph displacement calculating means (5f) for calculating actual displacement of the pantograph on the basis of the pixel position of the marker;
   **characterized in that** the image processing means further comprise:

   filtering processing means (5g) for performing smoothing processing on data on the displacement of the pantograph; and
   acceleration outputting means (5h) for outputting acceleration of the pantograph calculated on the basis of the data on the displacement of the pantograph smoothed by the smoothing processing means;
   wherein the pattern-matching processing means are adapted to set a pitch at which to shift the template, in accordance with a value representing correlation to the template and detected from the input image.

2. The device for measuring displacement of a pantograph according to claim 1, wherein, if a trace of the marker (4) lies over any two adjacent ones of the sections, the pattern-matching processing means (5e) are adapted to automatically corrects positions of the sections such that the trace of the marker is included within one of the sections on the basis of the position of the marker detected in an immediately previous line.

3. The device for measuring displacement of a pantograph according to claim 1, wherein the pattern-matching processing means (5e) are adapted to detect a rough center position of a trace of the marker (4), to calculate an average luminance value of a range starting from the center position and having half a width of the template, and to extract the trace of the marker by using the average luminance value as a threshold.

4. A method for detecting a hard spot of a trolley wire by using a device for measuring displacement of a pantograph including image capturing means (2) placed on a roof of a car (1) for capturing an image of a pantograph (1a), and image processing means (5) for acquiring displacement of the pantograph by performing image processing on an input image captured by the image capturing means, the method comprising:

a first step of acquiring, as a template, a marker pattern obtained by extracting a marker portion from an image acquired in advance;
a second step of creating an input image by using an image signal inputted from the image capturing means;
a third step of dividing the input image into a predetermined number of sections on the basis of a resolution of each of pixels obtained by calibration means;
a fourth step of scaling up or down the template for each of the sections of the input image on the basis of the resolution of the section;
a fifth step of detecting a pixel position of a marker (4) in the input image through pattern-matching processing of the template and the input image; and
a sixth step of calculating actual displacement of the pantograph on the basis of the pixel position of the marker;
the method **characterized by**:

a seventh step of performing smoothing processing on data on the displacement of the pantograph; and
an eighth step of outputting acceleration of the pantograph calculated on the basis of the data on the displacement of the pantograph smoothed by the smoothing processing means;
wherein the fifth step is performed by setting a pitch at which to shift the template, on the basis of a value representing correlation to the template and detected from the input image for each pixel position.

5. The method for detecting a hard spot of a trolley wire according to claim 4, wherein, if a trace of the marker (4) lies over any two adjacent ones of the sections, the fifth step is performed by automatically correcting positions of the sections such that the trace of the marker is included within one of the sections on the basis of a position of the marker detected in the immediately previous line.

6. The method for detecting a hard spot of a trolley wire according to claim 4, wherein the fifth step is performed by detecting a rough center position of a trace of the marker (4), calculating an average luminance value of a range starting from the center position and having half a width of the template, and using the average luminance value as a threshold.

**Patentansprüche**

1. Vorrichtung zum Messen von Verschiebung eines Stromabnehmers, die eine Bildaufnahmeeinrichtung (2), die dazu ausgelegt ist, auf dem Dach eines Wagens (1) zum Aufnehmen eines Bildes eines Stromabnehmers (1a) platziert zu sein, und eine Bildverarbeitungseinrichtung (5) zum Erfassen der Verschiebung des Stromabnehmers durch Ausführung von Bildverarbeitung an einem von der Bildaufnahmeeinrichtung aufgenommenen Eingabebild enthält, wobei die Bildverarbeitungseinrichtung umfasst:

eine Eingabebild-Erzeugungseinrichtung (5a) zum Erzeugen eines Eingabebildes unter Verwendung eines von der Bildaufnahmeeinrichtung eingegebenen Bildsignals;
eine Vorlageneinstelleinrichtung (5b) zum Erfassen, als eine Vorlage, eines Markierungsmusters, das durch Extrahieren eines Markierungsabschnitts aus einem im Voraus erfassten Bild erhalten wird;
eine Bildteilungsverarbeitungseinrichtung (5c) zum Teilen des Eingabebildes in eine vorgegebene Anzahl von Bereichen auf der Grundlage einer von einer Kalibrierungseinrichtung erhaltenen Auflösung aller Pixel;
eine Vorlagenskalierungsverarbeitungseinrichtung (5d) zum Herauf- oder Herunterskalieren der Vorlage für jeden der Bereiche des Eingabebildes auf der Grundlage der Auflösung des Bereiches;
eine Musterabgleichungsverarbeitungseinrichtung (5e) zum Detektieren einer Pixelposition einer Markierung (4) im Eingabebild unter Verwendung der Vorlage und des Eingabebildes; und
eine Stromabnehmerverschiebung-Berechnungseinrichtung (5f) zum Berechnen der aktuellen Verschiebung des Stromabnehmers auf der Grundlage der Pixelposition der Markierung;
**gekennzeichnet dadurch, dass** die Bildverarbeitungseinrichtung ferner umfasst:

eine Filterverarbeitungseinrichtung (5g) zum Ausführen von Glättungsverarbeitung an Daten über die Verschiebung des Stromabnehmers; und
eine Beschleunigungsausgabeeinrichtung (5h) zum Ausgeben der Beschleunigung des Stromabnehmers, die auf der Grundlage der Daten über die Verschiebung des Stromabnehmers berechnet worden ist, die von der Glättungsverarbeitungseinrichtung geglättet worden sind;
wobei die Musterabgleichungsverarbeitungseinrichtung dazu ausgelegt ist, einen Versatz, mit dem die Vorlage zu verschieben ist, gemäß einem Wert, der die Korrelation mit der Vorlage darstellt und aus dem Eingabebild detektiert worden ist, einzustellen.

2. Vorrichtung zum Messen der Verschiebung eines Stromabnehmers nach Anspruch 1, wobei die Musterabgleichungsverarbeitungseinrichtung (5e), falls eine Spur der Markierung (4) über irgendwelchen zwei benachbarten der Bereiche liegt, dazu ausgelegt ist, auf der Grundlage der in einer unmittelbar vorherigen Zeile detektierten Position der Markierung Positionen der Bereiche automatisch zu korrigieren, sodass die Spur der Markierung innerhalb eines der Bereiche enthalten ist.

3. Vorrichtung zum Messen der Verschiebung eines Stromabnehmers nach Anspruch 1, wobei die Musterabgleichungsverarbeitungseinrichtung (5e) dazu ausgelegt ist, eine ungefähre Mittelpunktsposition einer Spur der Markierung (4) zu detektieren, einen durchschnittlichen Helligkeitswert eines Bereiches, der an der Mittelpunktsposition beginnt und die halbe Breite der Vorlage aufweist, zu berechnen und die Spur der Markierung unter Verwendung des durchschnittlichen Helligkeitswerts als Schwellenwert zu extrahieren.

4. Verfahren zum Detektieren einer harten Stelle einer Hängeleitung unter Verwendung einer Vorrichtung zum Messen der Verschiebung eines Stromabnehmers, die eine auf einem Dach eines Wagens (1) platzierte Bildaufnahmeeinrichtung (2) zum Aufnehmen eines Bildes eines Pantographen (1a) und eine Bildverarbeitungseinrichtung (5) zum Erfassen der Verschiebung des Stromabnehmers durch Ausführung von Bildverarbeitung an einem von der Bildaufnahmeeinrichtung aufgenommenen Eingabebild enthält, wobei das Verfahren umfasst:

als einen ersten Schritt das Erfassen, als eine Vorlage, eines Markierungsmusters, das durch Extrahieren eines Markierungsabschnitts aus einem im Voraus erfassten Bild erhalten worden ist;
als einen zweiten Schritt das Erzeugen eines Eingabebildes unter Verwendung eines von der Bildaufnahmeeinrichtung eingegebenen Bildsignals;
als einen dritten Schritt das Teilen des Eingabebildes in eine vorgegebene Anzahl von Bereichen auf der Grundlage einer von einer Kalibrierungseinrichtung erhaltenen Auflösung aller Pixel;
als einen vierten Schritt das Herauf- oder Herunterskalieren der Vorlage für jeden der Bereiche des Eingabebildes auf der Grundlage der Auflösung des Bereiches;
als einen fünften Schritt das Detektieren einer Pixelposition einer Markierung (4) im Eingabebild durch Musterabgleichungsverarbeitung der Vorlage und des Eingabebildes und
als einen sechsten Schritt das Berechnen der aktuellen Verschiebung des Stromabnehmers auf der Grundlage der Pixelposition der Markierung;
wobei das Verfahren **gekennzeichnet ist durch**:

als einen siebten Schritt das Ausführen von Glättungsverarbeitung an Daten über die Verschiebung des Stromabnehmers und
als einen achten Schritt das Ausgeben der Beschleunigung des Stromabnehmers, die auf der Grundlage der Daten über die Verschiebung des Stromabnehmers, die von der Glättungsverarbeitungseinrichtung geglättet worden sind, berechnet worden ist;
wobei der fünfte Schritt **durch** Einstellen eines Versatzes, mit dem die Vorlage zu verschieben ist, auf der Grundlage eines Wertes, der die Korrelation mit der Vorlage darstellt und aus dem Eingabebild für jede Pixelposition detektiert worden ist, ausgeführt wird.

5. Verfahren zum Detektieren einer harten Stelle einer Hängeleitung nach Anspruch 4, wobei der fünfte Schritt, falls eine Spur der Markierung (4) über irgendwelchen zwei benachbarten der Bereiche liegt, ausgeführt wird, indem auf der Grundlage einer in der unmittelbar vorherigen Zeile detektierten Position der Markierung Positionen der Bereiche so korrigiert werden, dass die Spur der Markierung innerhalb eines der Bereiche enthalten ist.

6. Verfahren zum Detektieren einer harten Stelle einer Hängeleitung nach Anspruch 4, wobei der fünfte Schritt ausgeführt wird, indem eine ungefähre Mittelpunktposition einer Spur der Markierung (4) detektiert wird, ein durchschnittlicher Helligkeitswert eines Bereiches, der an der Mittelpunktsposition beginnt und die halbe Breite der Vorlage aufweist, berechnet wird und der durchschnittliche Helligkeitswert als ein Schwellenwert verwendet wird.

## Revendications

1. Dispositif pour mesurer le déplacement d'un pantographe, comprenant des moyens de capture d'image (2) adaptés de façon à être disposés sur le toit d'une voiture (1) pour capturer une image d'un pantographe (1a), et des moyens de traitement d'image (5) pour acquérir un déplacement du pantographe par réalisation d'un traitement d'image sur une image d'entrée capturée par les moyens de capture d'image,
dans lequel les moyens de traitement d'image comprennent :

des moyens de création d'une image d'entrée (5a) pour créer une image d'entrée à l'aide d'un signal d'image entré par des moyens de capture d'image ;
des moyens d'établissement d'un modèle (5b) pour acquérir, à titre de modèle, un motif de marqueur obtenu par extraction d'une partie d'un marqueur à partir d'une image acquise à l'avance ;
des moyens de traitement de division d'image (5c) pour diviser l'image d'entrée en un nombre prédéterminé de sections selon une définition de chacun des pixels obtenus par des moyens d'étalonnage ;
des moyens de traitement de mise à l'échelle de modèle (5d) pour augmenter ou diminuer l'échelle du modèle pour chacune des sections de l'image d'entrée selon la définition de la section ;
des moyens de traitement de correspondance de motif (5e) pour détecter une position de pixel d'un marqueur (4) dans l'image d'entrée à l'aide du modèle et de l'image d'entrée ; et
des moyens de calcul de déplacement de pantographe (5f) pour calculer un déplacement effectif du pantographe selon la position de pixel du marqueur ;
caractérisé en ce que les moyens de traitement d'image comprennent de plus :

des moyens de traitement de filtrage (5g) pour effectuer un traitement de lissage sur des données de déplacement du pantographe ; et
des moyens de sortie d'accélération (5h) pour délivrer en sortie une accélération du pantographe, calculée selon des données de déplacement du pantographe lissées par les moyens de traitement de lissage ;
dans lequel les moyens de traitement de correspondance de motif sont adaptés pour établir un pas modèle de changement du modèle, en fonction d'une valeur représentant une corrélation avec le modèle, et détectée à partir de l'image d'entrée.

2. Dispositif pour mesurer le déplacement d'un pantographe selon la revendication 1, dans lequel, si un tracé du marqueur (4) se trouve au-dessus de deux sections adjacentes quelconques des sections, les moyens de traitement de correspondance de motif (5e) sont adaptés pour corriger automatiquement des positions des sections de sorte que le tracé du marqueur soit inclus à l'intérieur de l'une des sections selon la position du marqueur détectée dans une ligne immédiatement précédente.

3. Dispositif pour mesurer le déplacement d'un pantographe selon la revendication 1, dans lequel les moyens de traitement de correspondance de motif (5e) sont adaptés pour détecter une position centrale grossière d'un tracé du marqueur (4), pour calculer une valeur de luminance moyenne d'une plage commençant à partir de la position centrale et ayant une largeur de la moitié de celle du modèle, et de façon à extraire le tracé du marqueur à l'aide de la valeur de luminance moyenne à titre de seuil.

4. Procédé pour détecter un point dur d'un fil de caténaire à l'aide d'un dispositif pour mesurer le déplacement d'un pantographe comprenant des moyens de capture d'image (2) disposés sur le toit d'une voiture (1) pour capturer une image d'un pantographe (1a), et des moyens de traitement d'image (5) pour acquérir un déplacement du pantographe par réalisation d'un traitement d'image sur une image d'entrée capturée par les moyens de capture d'image, le procédé comprenant :

une première étape d'acquisition, à titre de modèle, d'un motif de marqueur obtenu par l'extraction d'une partie de marqueur à partir d'une image acquise à l'avance ;

une deuxième étape de création d'une image d'entrée à partir d'un signal d'image entré par des moyens de capture d'image ;

une troisième étape de division de l'image d'entrée en un nombre prédéterminé de sections selon une définition de chacun des pixels obtenus par des moyens d'étalonnage ;

une quatrième étape d'augmentation ou de diminution de l'échelle du modèle pour chacune des sections de l'image d'entrée, selon la définition de la section ;

une cinquième étape de détection d'une position de pixel d'un marqueur (4) dans l'image d'entrée, à l'aide d'un traitement de correspondance de motif du modèle et de l'image d'entrée ; et

une sixième étape de calcul du déplacement effectif du pantographe selon la position de pixel du marqueur ;

le procédé étant **caractérisé par** :

une septième étape de réalisation d'un traitement de lissage sur des données de déplacement du pantographe ; et

une huitième étape de délivrance en sortie d'une accélération du pantographe, calculée en fonction des données de déplacement du pantographe lissées par les moyens de traitement de lissage ;

dans lequel la cinquième étape est effectuée par l'établissement d'un pas de changement du modèle, selon une valeur représentant une corrélation avec le modèle, et détectée à partir de l'image d'entrée pour chaque position de pixel.

5. Procédé pour détecter un point dur d'un fil de caténaire selon la revendication 4, dans lequel, si un tracé du marqueur (4) se trouve au-dessus de deux sections adjacentes quelconques des sections, la cinquième étape est effectuée par la correction automatique des positions des sections de telle sorte que le tracé du marqueur est inclus à l'intérieur de l'une des sections en fonction de la position du marqueur détectée dans la ligne immédiatement précédente.

6. Procédé pour détecter un point dur d'un fil de caténaire selon la revendication 4, dans lequel la cinquième étape est effectuée par la détection d'une position centrale grossière d'un tracé du marqueur (4), le calcul d'une valeur de luminance moyenne d'une plage commençant à partir de la position centrale et ayant une largeur de la moitié de celle du modèle, et l'utilisation de la valeur de luminance moyenne à titre de seuil.

# Fig.1

# Fig.2

## Fig.3

LINE SENSOR — 2

IMAGE SIGNAL ↓

INPUT IMAGE CREATING UNIT — 5a

INPUT IMAGE ↓

m1 — MEMORY

INPUT IMAGE

MEMORY

INPUT IMAGE →
← REFERENCE TEMPLATE
TEMPLATE SETTING UNIT — 5b

INPUT IMAGE →
← SECTION INFORMATION
IMAGE DIVIDING UNIT — 5c

m2

REFERENCE TEMPLATE →
← SCALING TEMPLATE
TEMPLATE ENLARGING/REDUCING UNIT — 5d

SCALING TEMPLATE ·SECTION INFORMATION →
← PIXEL POSITION OF MARKER
PATTERN MATCHING UNIT — 5e

PIXEL POSITION OF MARKER →
← DISPLACEMENT DATA
PANTOGRAPH DISPLACEMENT CALCULATING UNIT — 5f

DISPLACEMENT DATA →
← SMOOTHED DISPLACEMENT DATA
FILTERING UNIT — 5g

SMOOTHED DISPLACEMENT DATA →
← ACCELERATION DATA
ACCELERATION OUTPUT UNIT — 5h

EP 2 431 706 B1

18

## Fig.4

HEIGHT →

TIME ↓

6b    6b    6a    6a    M    6b

$W_{OS}$    $W_T$

6

## Fig.5

7a    7b    7a

$W_T$

7

## Fig.6

HEIGHT →

TIME ↓

8  6b    8    6a    8    6a    8    6b    8

$A_1$    $A_2$    $A_N$

6

*Fig.7*

```
                    ┌─────────┐
                    │  Start  │
                    └─────────┘
                         │
                         ▼
        ┌──────────────────────────────┐
        │     REGISTER TEMPLATE         ├── P1
        └──────────────────────────────┘
                         │
                         ▼
        ┌──────────────────────────────┐
        │     CREATE INPUT IMAGE        ├── P2
        └──────────────────────────────┘
                         │
                         ▼
        ┌──────────────────────────────┐
        │       DIVIDE IMAGE            ├── P3
        └──────────────────────────────┘
                         │
                         ▼
 P4 ── ┌──────────────────────────────┐
        │   SCALE UP OR DOWN TEMPLATE   │
        └──────────────────────────────┘
                         │
                         ▼
        ┌──────────────────────────────┐
        │   PERFORM PATTERN-MATCHING    ├── P5
        └──────────────────────────────┘
                         │
                         ▼
          P6            ╱╲
                 ╱ SECTION IS ╲      YES
                ╲  COMPLETED? ╱ ─────────►
                    ╲  ╱
                     │ NO
                     ▼              P7
                    ╱╲
         NO    ╱ PROCESSING  ╲
        ◄───── ╲ IS COMPLETED ╱
               ╲ FOR DATA? ╱
                    │ YES
                    ▼
        ┌──────────────────────────────────┐
        │  CALCULATE PANTOGRAPH DISPLACEMENT ├── P8
        └──────────────────────────────────┘
                    │
                    ▼
        ┌──────────────────────────────┐
        │     PERFORM FILTERING         ├── P9
        └──────────────────────────────┘
                    │
                    ▼
        ┌──────────────────────────────┐
        │    OUTPUT ACCELERATION        ├── P10
        └──────────────────────────────┘
                    │
                    ▼
              ┌─────────┐
              │   End   │
              └─────────┘
```

*Fig.8*

HEIGHT →

TIME ↓

$R_L$    $R_H$    $R_L$

6

## Fig.9

HEIGHT

TIME

## Fig.10

HEIGHT

TIME

## Fig.11

HEIGHT

TIME

# Fig.12

HEIGHT

TIME

LUMINANCE VALUE

$B_A$

PIXEL POSITION

$W_T/2$

6

# Fig.13

*Fig.14(a)*

*Fig.14(b)*

EP 2 431 706 B1

**EP 2 431 706 B1**

**Patent documents cited in the description**

- JP 2006250774 A
- JP 2008104312 A

- JP 2009011648 A